# EUROPEAN PATENT APPLICATION

(11) **EP 1 480 478 A2**
(43) Date of publication of application: **24.11.2004**
(21) Application number: 04103929.8
(22) Date of filing: 24.11.2000
(51) Int. Cl.: H04Q 7/34

(54) **Traffic Monitoring**

(62) Divisional of application: 00981517.6
(71) Applicant: Nokia Corporation, 02150 Espoo (FI)
(72) Inventor: Aaltonen, Janne, 20100, Turku (FI); Salo, Juha, 20660, Littoinen (FI)
(74) Representative: Derry, Paul Stefan

(57) **Abstract**

A cellular network (1) is described in which an analyser (8) is able to monitor traffic on routes in a transport infrastructure such as a road network. The analyser (8) utilise data derived from the subscriber database (7) of the network in conjunction with information (9) on network coverage in relation to those routes in order to determine parameters such as the average speed of vehicles travelling along the road network

## Description

Cellular networks exist to provide telephony services to, in particular mobile users. As is well known, each network consists of a plurality of cells within which a particular subset of a range of radio frequencies is utilised to provide a communications link between a users mobile station and a calling or called party. The particular topology of each cell will be influenced by a variety of factors including user demand and terrain. Clearly, where user demand is high the re-use frequency will necessitate an increased number of smaller cells to provide effective service to users. As regards the overall topology of the network at least in the early stages of network development resources may be concentrated on areas of high population or use. Thus coverage will be extensive in cities and along the major elements of the transport infrastructure e.g. railway lines, trunk roads and the like.

One benefit such a network provides is the delivery of information relating to traffic conditions pertaining in a region covered by the network. In the case of a road network, Information gathered by roadside monitoring apparatus, observers, road-patrols and the like is collated and provided on demand to users of the network. In some networks, a service is provided by which the network, utilising the knowledge of the serving cell, is able to provide information relevant to the transport network in the locality of the user's mobile station.

However, the costs of obtaining traffic information to a network operator can be high. In is particular because the operator is forced to rely on observers or dedicated patrols to monitor traffic conditions. The complexities and quite often the delay inherent in deriving and then supplying information in a usable form render the service an expensive one. Added to the expense is the negative impact on a network provider if the information provided by them is inaccurate or delayed.

Sankar R et al: "Traffic Monitoring and Congestion Prediction Using Handoffs in Wireless Cellular Communications", IEEE Vehicular Technology Conference, New York IEEE, US vol. 2 Conf. 47, 4 May 1997, pages 520-524 discloses the monitoring of cellular telephone handovers to determine congestion.

Thus, according to one aspect of the invention, there is provided a method as claimed in claim 1.

Whilst according to a second aspect of the invention there is also provided a system as claimed in claim 6.

Handover is a feature of any cellular network whether a regional network or an adhoc local network based on a low power radio frequency protocol. In the case of so-called second generation public land mobile networks (PLMN) such as GSM, hard handover occurs between cells that is there is a precise point in time at which the base station serving the terminal is changed to another base station. Conveniently, this handover time is stored in the subscriber database and may be used in calculation to determine average speed and the like of terminals passing between cells. In the case of so-called third generation networks employing code division multiple access schemes, handover is not hard in the above sense. Instead, there is a so-called soft handover or transition between serving base stations.

Nevertheless, to define a point in time at which handover occurs it is preferable to predefine a value in terms of the handover process which when reached can be used to provide a time for subsequent use in any calculations based on information derived from the subscriber database.

It has thus been found possible to calculate with statistically quantifiable accuracy the average speed and similar parameters of terminals travelling along the transport infrastructure of a region without recourse to direct observation of the transport infrastructure. The indirect approach of the present invention brings advantages in cost, accuracy and processing time, for example. The infrastructure may be as large as the routes of a regional road network or a small as a shopping mall or precinct where the physical layout of the building or buildings defines routes which can be taken by terminals carried in the pockets of shoppers, for example. Whatever the size of the infrastructure it is preferable that cell size is such that the parameters obtained are useful to users of the information obtained. Thus in the case of a regional road network, the cell size should enable the route, in this case a road, to be divided into segments between major junctions, for example. In the case of a shopping mall or precinct microcells and/or picocells may be required to enable useful monitoring of terminal movements.

Preferably the parameters obtained for individual terminals will be filtered to remove those likely to cause errors when calculating an average value such as speed. This is particularly useful in the case of large infrastructures containing generally fast moving terminals such as those carried in vehicles on a road network. Without filtering to remove those terminals travelling slowly between cells in a sequence along a route, the parameter, in this case average speed will be skewed by users carrying their terminal on foot between cells. However, advantageously when a significant proportion of those terminals identified as travelling along a certain route have a very low average speed, say walking pace, this may be indicative of a potential problem reducing terminal speed such as an accident on the road. In which case it is preferred that the proportion of very slow terminals is monitored and where this exceeds a predetermined value rather than discount these terminals in an average speed calculation they are included.

In order to overcome any ambiguity arising where a present cell containing a segment of a route of interest also contains one or more other routes, it is preferable to obtain handover times and segment lengths of the route of interest in those cells preceding and/or succeeding the present cell until the one or more routes other routes in the present cell are no longer contained in a cell containing the route of interest. As a consequence, an average speed may only be derived for the entire set of segment lengths calculated from the resulting span of cells. Should an average speed be desired for a smaller span of cells such as the present cell the terminals identified as travelling though the span on the route of interest may be stored following the above process and subsequently used in an identification step to exclude data from those terminals not travelling along the route of interest.

In order to aid in understanding the present invention, a particular embodiment thereof will now be described by way of example and with reference to the accompanying drawings, in which:
Figure 1 is a view of a Public Land Mobile Network (PLMN) reference model according to the present invention;
Figure 2 is a diagrammatic view of a portion of a cellular topology in a region covered by the PLMN of Figure 1;
Figure 3 is a partial table of data held in a subscriber database of the PLMN of Figure 1; and
Figure 4 is a partial table of data held in an infrastructure database of the PLMN of Figure 1.

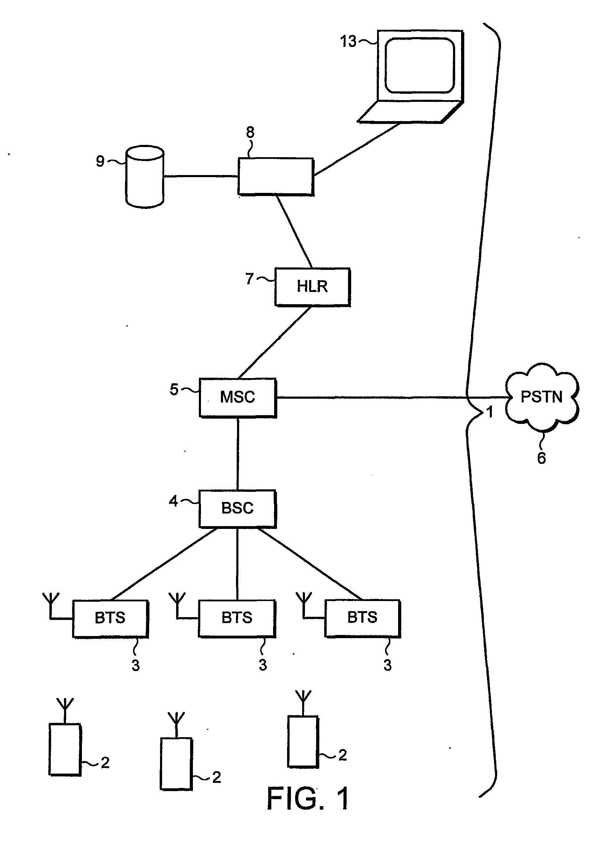

Referring to Figure 1, there is shown a PLMN. In the following, reference is made, at least in part, to the GSM nomenclature for ease of understanding by those skilled in the art. Nevertheless, those skilled in the art will understand that the use of such references is purely exemplary and should be taken to refer to network elements of other PLMN types having corresponding and/or similar functions or indeed to those aspects of other non-PLMN cellular networks.

The PLMN 1 includes a mobile part made up of a plurality of mobile stations MS 2 and a fixed part made up of a number of entities. Thus, signals are received from and transmitted to an MS 2 by a Base Transceiver Station 3 (BTS). A set of BTS 3 communicate with a Base Station Controller (BSC) 4.

The BSC 3, or which there may be more than one (otherwise not shown), communicates with a Mobile Switching Centre 5 (MSC). The MSC 5 has a connection via a Gateway Management Switching Centre (GSMC) (not shown) to an external Public Switched Telephone Network 6 (PSTN). To support the operation of the MSC 5, a subscriber database or Home Location Register 7 (HLR) is maintained. Further network entities providing information on traffic congestion in a transport infrastructure are described below.

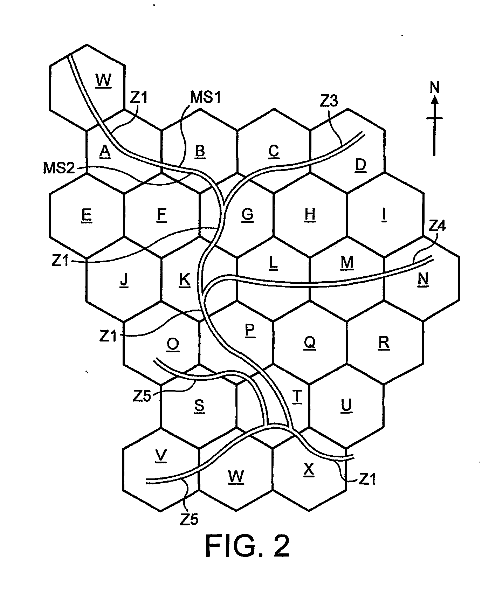

The operation of a PLMN 1 at least as regards the transmission of voice and/or data between a Mobile Station (MS) 2 and a called or calling party is well known. In order to provide mobility, that is the ability to correctly route calls from and to a MS 2, information concerning the location and characteristics of each MS 2 is held in a subscriber database known in the GSM case as a Home Location Register (HLR) 7. This information is defined in the GSM case by the Technical Specifications TS 100 927 and TS 100 526 both published by the European Telecommunications Standards Institute (ETSI). Figure 2 is a table illustrating further information stored in the database 7 relevant to performing an analysis of a transport infrastructure within the PLMN region. In particular, this further information may be used to monitor congestion in the transport infrastructure. Thus the table includes data from which can be derived the cell with which an MS is or has previously been in contact, and the time that contact was established with that cell. If available, the database 7 retains the data relating to at least the previous two cells with which the MS 1 has been in contact.

In order to distribute the signalling load on the database 7 some or all of the information held in that database may be held or mirrored in one or more subsidiary database (not shown), which in the GSM case is known as a Visitor Location Register (VLR). The subsidiary database may hold information relating to only a portion of the network.

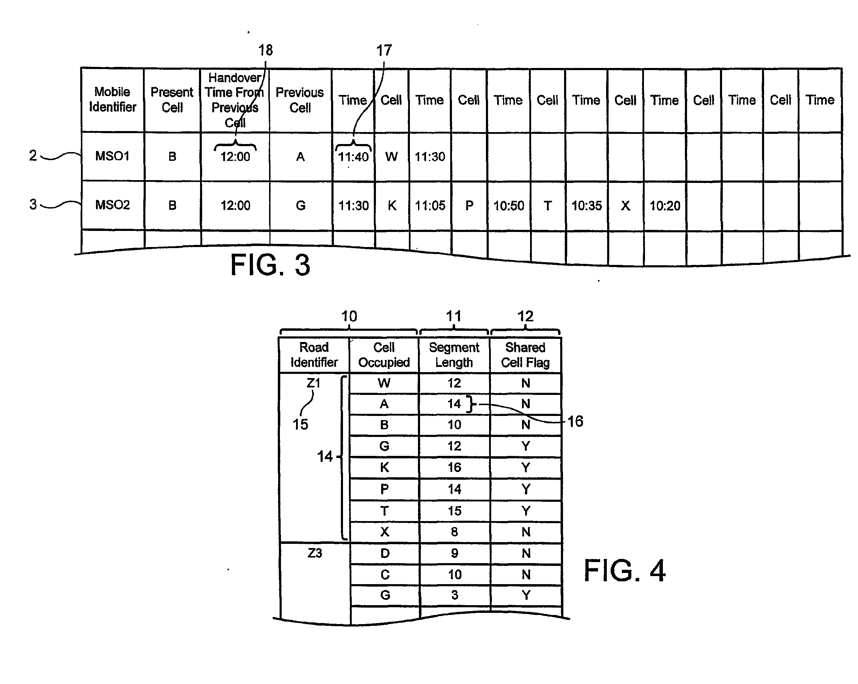

The information held in the database 7 set out above is made available to a traffic analyser 8. The traffic analyser 8 is further connected to transport infrastructure database 9 holding details of routes such as roads within the geographical region covered by the network 1. This information is held in the form off a congestion data table (Figure 3) identifying the routes or roads 10 which pass through each cell (A to W of Figure 4). For each cell there is further stored data indicative of the length 11 of each segment of the route passing through that cell.

In operation, the analyser 8 receives a request for traffic information. The request could be initiated on a regular basis for updating a display of traffic conditions or it might provide information in response to a specific request, perhaps from a MS 1.

With reference in particular to Figures 2, 3 and 4, the request may be for an identification of average speeds along some length of a particular road located in the coverage area of the PLMN 1. The analyser 8, once provided in the request with a reference number Z1 for the road, accesses the infrastructure database 9 and obtains a list of those cells 10 through which the road Z1 passes whereby an average speed for the traffic travelling along each or a collocation of segments of that road Z2 may ultimately be calculated in either or both directions.

The analyser 8, using the list obtained from the infrastructure database 9, interrogates the subscriber database 7 or indeed an appropriate subsidiary database. The analyser 8 obtains the congestion data (Figure 3) from MS located in those cells 10 identified as containing the road Z1. For the cells 10 identified by the infrastructure database 9, the analyser 8 identifies for each cell in turn the data of those MS which have been in contact with each said cell and at least two preceding cells along the route of the road. The analyser 8 further obtains the time at which handover occurred from the previous cell to the present cell and to the previous cell from the cell previous to that. This provides a transit time across the cell immediately preceding the present cell.

The analyser 8 also accesses the infrastructure database 9 to obtain the length of a segment 12 of the road Z1 present within the previous cell.

An example of the process by which the average speed is determined on the road Z1 through the area covered by cell A is given below.

A request for southbound average speed along road Z1 in the area covered by cell A is received by the analyser 8 from a terminal 13. The analyser 8 contacts the infrastructure database 9 and retrieves data identifying the cells 14 occupied by the road by reference to the road identifier 15. By reference to the data 14 the analyser 8 determines that MS 1 data will be required for the present cell B, and the immediately preceding cells A and W. The analyser 8 then contacts the subscriber database 7 and identifies two records MS01 12 and MS02 13 which are presently located in cell B. Consideration of the records reveals that MS02 was previously located in cell G and cannot be utilised in responding to the request. However MS01 was located previously in cell A and before that Cell W. Thus, the record 12 for MS01 satisfies the requirements of the request. In a similar manner a population of records (not shown) are built up from MS presently located in cell B and having a previous presence in cells A and W. The analyser 8 further obtains for cell A, the length 16 of the segment of road Z1 passing through it, in this case 14 miles.

Once provided with the above described information, the analyser 8 is able to derive how long each MS took to transit through the second cell and then, on the assumption that transit took place using the road, the average speed can be determined. Thus in the present example, entry into cell A from cell W occurred at 11: 40 17 whilst entry into cell B from cell A occurred at 12: 00 18.

Consequently, the time taken to transit through cell A over the 14 mile segment length was 20 minutes. This corresponds to an average speed through the region covered by cell A of 42mph.

If required the analyser 8 may repeat the above process for each cell containing a length of road identified in the request. The process may also be repeated in taking each cell along the road in the opposite sense to identify an average speed in the opposite travelling direction, if required by the request.

Clearly, not all MS in those cells containing the road will be travelling along the road of interest. The analyser 8 must therefore attempt to remove these MS from the information used to provide a response to the request. Thus, the analyser 8 will ignore data from an MS which has transited through the three cells presently being analysed if the handover times occurred at intervals greater than that considered reasonable. Thus, a check will be made to determine whether the interval between handovers is of the order of hours and certainly days. However, in the special case where an unexpected and long delay occurs on the road, perhaps due to a traffic accident, the analyser 8 will, identify what proportion of those MS travelling through the three cells of interest are removed for the above reason, namely too long a transit time. If this proportion rises above a certain level, which may be established after observation of traffic conditions in that cell, the analyser 8 may reasonably determine that a severe delay is present. In which case, the MS will not be removed from the population used to respond to the request and a correspondingly low average speed value will be calculated for that segment of the road.

In addition to the simple filtering described above, the analyser 8 may perform statistical operations on the information derived from the subscriber database 7 to ensure that the results provided in response to the request meet a certain confidence level. Such statistical techniques will be well known to those skilled in the art and could include determining the margin of error based on the MS population size.

Another difficulty the analyser 8 should address is where a number of different roads pass through the same cell or cells, such as might occur around a junction as exemplified by the cell T of Figure 2. In this case, it will be seen that although the roads Z1, Z5 split in cell T, the roads are adjacent within cell P although they ultimately pass into different cells O and K to the north of the junction and cells W and X south of the junction. Clearly, anomalous results would be obtained for flow of traffic on road Z1 through cell T if simply this cell together with cell P and cell X where used to calculate a result in the manner previously described. This is because traffic on the adjacent road Z5 also causes handovers between cell. T and cell P which will be held in the subscriber database 7. In order to overcome this difficulty, either the analyser 8 identifies from the data held in the infrastructure database 9 that plural roads occupy the same cell or the infrastructure database 9 includes a flag identifying those cells containing plural roads.

Consequently, where the analyser 8 is aware of plural roads, the span of cells along the road of interest over which the MS are identified is extended from the three cells necessary to identify the transit time based on handovers into and out of a central cell to ensure that MS travelling along any road not of interest is excluded from the MS population. Thus, in the event that a request is made for average traffic speed on road Z1 along the segment covered by cell T, it is to be noted that although Z1 is the only road to cross from cell T into cell X, this is not the case where road Z1 enters cell T from cell P. In this latter instance road Z5 also enters into cell T from cell P. Simply monitoring the number of handovers from cell P into cell T would include those MS travelling into cell T from cell P on road Z5. To exclude these MS from the population of MS used in the calculation it therefore necessary to look at handovers from cell K into cell P as this will exclude any MS travelling on road Z5. Assuming a population of MS exist whose history consists of handovers from cell K to cell P to cell T and to cell X it is possible to determine the transit time and for MS between the handover from cell K to P and to cell X from cell T. Knowing this time period and the total segment length of cells P and T, the average speed, for example, can be determined over the road Z1 through the two segments.

However, where many roads are closely packed within a number of shared adjacent cells it will be necessary to extend the span of cells until a history can be established of those MS present on the road of interest. Clearly, where the span is long, the segment length will be greater and the sensitivity of the analysis, particular in urban areas, is correspondingly reduced. In such situations it may be preferable for the analyser 8, firstly to identify the MS population travelling the road of interest by extending the span of cells as described above, and to store the information derived from the subscriber database 7 identifying all the MS of interest. Subsequently, an analysis of the three cells bracketing the cell containing the road segment of interest can be carried out by ignoring all those MS in this population which do not correspond to those previously identified from the larger span. As a result, those MS not travelling on a road of interest are excluded from the analysis and an average speed for example may be found for the segment passing through the cell of interest.

It will be appreciated by those skilled in the art that although the above embodiment refers to a road the invention is applicable to the analysis of traffic patterns in other circumstances. Thus, the invention could be employed to monitor movement throughout a shopping mall, airport concourse, indeed anywhere provided a sufficiently dense cell topology exists to enable differentiation of MS movements within that environment. The information obtained would provide benefits in terms of planning and modifying such environments.

## Claims

1. A method of monitoring traffic in a region covered by a cellular network including a plurality of terminals (2), the network having a subscriber database (7), the method comprising:
identifying a sequence of cells containing adjoining segments of a route, and
interrogating the subscriber database (7) to establish which terminals have sequentially visited a plurality of said sequence of cells,
the method being **characterised by** providing an infrastructure database (9) which includes flags identifying those cells including plural roads.

2. A method as claimed in claim 1, comprising interrogating the subscriber database (7) to establish the time of handover between said sequentially visited cells.

3. A method as claimed in claim 1 or claim 2, including associating a segment length with a corresponding cell of said sequence.

4. A method as claimed in any preceding claim, comprising monitoring the traffic in response to a request received by said network.

5. A method as claimed in claim 4, wherein the request is generated in a terminal connected to said network.

6. A system for monitoring traffic comprising:
a connection to a subscriber database (7) of a cellular network including a plurality of terminals (2),
an infrastructure database (9) identifying cells of the network containing adjoining segments of a route, and
an analyser (8) operable to identify from the subscriber database terminals having visited said identified cells in a predetermined sequence,
the system being **characterised in that** the infrastructure database (9) includes flags identifying those cells including plural roads.

7. A system as claimed in claim 6, wherein the infrastructure database (9) contains, for each cell of a sequence identifying a route, a corresponding segment length.

8. A system as claimed in claim 6 or claim 7, wherein the analyser (8) is operable in respect of each said terminal (2) to determine from the subscriber database the time of handover between visited ones of said sequence of cells.

9. A system as claimed in claim 7 and claim 8, wherein the analyser (8) includes calculating means to derive an average speed of a terminal (2) for a visited one of said cells by dividing a corresponding segment length by a time difference calculated from said handover times.

10. A system as claimed in claim 9, wherein the calculating means is operable to determine said time difference by subtracting the handover time out of said cell into a next cell in the sequence from the handover time into said cell from a previous cell in the sequence.

11. A system as claimed in claim 8, wherein the calculating means is operable to determine said time difference by subtracting the time at which took place from the said cell into a next cell in the sequence from the time at which handover took place into said cell from a previous cell in the sequence.

12. A method of monitoring traffic in a region covered by a cellular network including a plurality of terminals (2), the network having a subscriber database (7), the method comprising identifying a sequence of cells containing adjoining segments of a route and interrogating the subscriber database (7) to establish which terminals (2) have sequentially visited a plurality of said sequence of cells.

13. A method as claimed in any of claims 1 to 5 or as claimed in claim 12, comprising:
extending the span of cells until a history can be established of those terminals present on the route of interest,
using the extended span of cells to identify a population of terminals travelling the route of interest,
storing information derived from the subscriber database (7) identifying terminals (2) travelling through a number of cells bracketing a cell containing a segment of the route of interest, and
performing an analysis of terminals (2) travelling on the route of interest through the segment by ignoring all those terminals (2) which do not correspond to terminals (2) in the population.

14. A system for monitoring traffic comprising:
a connection to a subscriber database (7) of a cellular network including a plurality of terminals (2),
an infrastructure database (9) identifying cells of the network containing adjoining segments of a route, and
an analyser (8) operable to identify from the subscriber database (7) terminals (2) having visited said identified cells in a predetermined sequence.

15. A system as claimed in any of claims 6 to 11 or as claimed in claim 14, in which the analyser (8) is arranged:
to extend the span of cells until a history can be established of those terminals present on the route of interest,
to use the extended span of cells to identify a population of terminals travelling the route of interest,
to store information derived from the subscriber database (7) identifying terminals (2) travelling through a number of cells bracketing a cell containing a segment of the route of interest, and
to perform an analysis of terminals (2) travelling on the route of interest through the segment by ignoring all those terminals (2) which do not correspond to terminals (2) in the population.
